Europäisches Patentamt

European Patent Office

Office européen des brevets

(11) Publication number: **0 664 084 A1**

## EUROPEAN PATENT APPLICATION
### published in accordance with Art. 158(3) EPC

(21) Application number: **94923071.8**

(22) Date of filing: **04.08.94**

(86) International application number:
**PCT/JP94/01288**

(87) International publication number:
**WO 95/04480 (16.02.95 95/08)**

(51) Int. Cl.6: **A23L 1/307**

(30) Priority: **05.08.93 JP 194687/93**

(43) Date of publication of application:
**26.07.95 Bulletin 95/30**

(84) Designated Contracting States:
**DE DK FR GB IT**

(71) Applicant: **AJINOMOTO CO., INC.**
**15-1,Kyobashi 1-chome,**
**Chuo-ku**
**Tokyo 104 (JP)**

(72) Inventor: **YAMAGATA, Mineo Food Research & Development Lab.**
**Ajinomoto Co., Inc.**
**1-1, Suzuki-cho**
**Kawasaki-ku**
**Kawasaki-shi**
**Kanagawa-ken 210 (JP)**
Inventor: **TAKAGAKI, Yasuo Food Research & Development Lab.**
**Ajinomoto Co., Inc.**
**1-1, Suzuki-cho**
**Kawasaki-ku**
**Kawasaki-shi**
**Kanagawa-ken 210 (JP)**
Inventor: **MORITA, Yasutsugu Food Research &Development Lab.**
**Ajinomoto Co., Inc.**
**1-1, Suzuki-cho**
**Kawasaki-ku**
**Kawasaki-shi**
**Kanagawa-ken 210 (JP)**
Inventor: **FUSEYA, Yoshihiko Food Research &Development Lab.**
**Ajinomoto Co., Inc.**
**1-1, Suzuki-cho**

**Kawasaki-ku**
**Kawasaki-shi**
**Kanagawa-ken 210 (JP)**
Inventor: **KONOIKE, Tatsuo Food Research & Development Lab.**
**Ajinomoto Co., Inc.**
**1-1, Suzuki-cho**
**Kawasaki-ku**
**Kawasaki-shi**
**Kanagawa-ken 210 (JP)**
Inventor: **MARUYAMA, Kentaro Food Research &Development Lab.**
**Ajinomoto Co., Inc.**
**1-1, Suzuki-cho**
**Kawasaki-ku**
**Kawasaki-shi**
**Kanagawa-ken 210 (JP)**
Inventor: **KONISHI, Mikiyasu**
**2192-6, Fukaya**
**Ayase-shi**
**Kanagawa-ken 252 (JP)**
Inventor: **TSUJIMURA, Hamana**
**11-24, Shimonoge 3-chome**
**Takatsu-ku**
**Kawasaki-shi**
**Kanagawa-ken 213 (JP)**

(74) Representative: **Nicholls, Kathryn Margaret et al**
**MEWBURN ELLIS**
**York House**
**23 Kingsway**
**London WC2B 6HP (GB)**

EP 0 664 084 A1

(54) **PASTE FOR FOOD, PROCESS FOR PRODUCING THE SAME, AND FOOD CONTAINING THE SAME.**

(57) A palatable paste for food which contains 1.5-10 wt.% of carrageenans mainly comprising kappa-carrageenan and 2-30 wt.%, based on the carrageenans, of potassium ions and has a viscosity of 300-25,000 cP at 25 °C, and wherein substantially the whole of a 1 wt.% aqueous solution of the carrageenans passes through a sieve with a JIS opening of 20 $\mu$m. The paste is voluminous and palatable, imparts excellent taste and palatability to various foods, and particularly is usable as a partial or whole substitute for the fat component of a fat-containing emulsion food, thus being extremely useful for lowering the calorific value of such a food.

## EP 0 664 084 A1

Technical Field

The present invention relates to paste for foods comprising $x$-carrageenan and potassium ions as associated cations, a method for preparing the paste and a food containing the same. The paste for foods of the present invention has a bulky and smooth taste and texture and when added to various kinds of foods, it can impart excellent flavour, and taste and texture to the foods. Moreover, it can be used as a substitute for, in particular, a part or the whole of fat and oil components of emulsion foods containing fats and oils and is accordingly quite suitable for reducing the calorific value of such foods.

Background Art

Carrageenan which is a kind of sulfated polysaccharide extracted and produced from, for instance, red algae has been used in fruit jelly, milk jelly or the like as a gelling agent or thickener. Moreover, it has also been used in, for instance, dairy products and ice cream as a viscosity-stabilizing agent. In addition, it has also been known to be effective as an agent for improving water-holding and binding capacities of processed meat products.

In the preparation of fruit jelly, carrageenan is in general dissolved such that the content of $x$-carrageenan ranges from 0.2 to 0.7% by weight and then converted into gel through cooling. The concentration of $x$-carrageenan used in milk jelly is lower than that used in the fruit jelly, the concentration thereof in ice cream is lower than that used in the milk jelly and $x$-carrageenan serving as a stabilizer is in general used in an amount ranging from 0.01 to 0.02% by weight.

These applications make use of such properties of carrageenan that it can form gel even at a low concentration because of the reactivity with casein molecules. The concentration thereof is currently about 0.5% by weight even when preparing aqueous gel and never exceeds 1.0% by weight even when formation of particularly stable gel is required.

In some cases, carrageenan has been used in salad dressings, but is used as a viscosity-stabilizing agent in a very low concentration in the order of not more than 0.1% by weight. If it is used in combination with a thickener, such an effect thereof can still be ensured even at a much lower concentration.

An aqueous composition containing carrageenan in a currently used low concentration is effective as a gelling agent or a stabilizer, but a solution obtained by dissolving carrageenan in water at a high temperature undergoes gellation and looses its fluidity as the solution is cooled. For this reason, carrageenan can presently be used in foods simply as a gelling agent and a stabilizer. Any attempt for fitting carrageenan to numerous uses has never been done. Moreover, any attempts for using carrageenan in a concentration higher than that currently used has never been done. In particular, $x$-carrageenan forms stable gel at a concentration of not less than 1.0% by weight and such stable gel is beyond the scope of foods.

The gel containing $x$-carrageenan in a high concentration has high gel strength and high elasticity and accordingly, it is difficult to mechanically treat such gel.

With regard to emulsion foods as stable compositions which are dispersions of aqueous phases and fat and oil phases, such as dairy products (for instance, raw cream, yoghurt, ice cream), salad dressings, mayonnaise and emulsified products prepared from soybean as a raw material, there have recently been desired for the reduction of the fat and oil content thereof, i.e., the development of low calorific food products.

Other important physical properties of these low calorific emulsified foods are smoothness in taste and texture and good flavour. Therefore, ingredients to be incorporated into these foods must satisfy essential requirements such that they have smooth taste and texture and are free of foreign flavour. Nevertheless, the use of carrageenan makes it very difficult to fulfill these requirements.

Disclosure of the Invention

It is an object of the present invention to provide paste for foods which has bulky and smooth taste and texture, and stable viscosity characteristics and can impart excellent flavour and taste and texture to various kinds of foods through addition of the paste thereto and, in paricular, to provide paste for foods which may be used as a substitute for a part or the whole of the fat and oil components of emulsion foods containing fats and oils.

Another object of the present invention is to provide a method for preparing the foregoing paste for foods.

A still another object of the present invention is to provide a food, in particular, a low calorific food containing the foregoing paste for foods.

According to an aspect of the present invention, there is provided paste for foods having smooth taste and texture which comprises 1.5 to 10% by weight of carrageenan mainly comprising x-carrageenan and 2 to 30% by weight of potassium ions based on the amount of the carrageenan, wherein it has a viscosity as determined at 25°C ranging from 300 to 25000 cps and wherein a diluent obtained by diluting the paste with water such that the concentration of the carrageenan is equal to 1% by weight can substantially completely pass through a sieve having a JIS mesh of 20$\mu$m.

According to another aspect of the present invention, there is also provided a method for preparing paste for foods which comprises the steps of heating an aqueous composition comprising 1.5 to 10% by weight of carrageenan mainly comprising x-carrageenan and 2 to 30% by weight of potassium ions based on the amount of the carrageenan up to a temperature higher than the fusion temperature of carrageenan gel to dissolve the carrageenan and then cooling the composition down to a temperature less than the gelling temperature of the composition while applying a shearing force thereto.

According to a still another aspect of the present invention, there is provided a food comprising the foregoing paste for foods such as salad dressings, mayonnaise, mayonnaise-like products, mayonnaise-added products, ice cream or whipped cream.

Brief Description of the Drawings

Fig. 1 is a cross sectional view illustrating a cooling type colloid-mill usable in the preparation of the paste of the present invention.

Fig. 2 is a diagram showing the viscoelastic properties of the paste of the present invention and gel having the same composition.

Fig. 3 is a diagram showing the results of differential thermal analysis of the paste of the present invention and gel having the same composition.

Fig. 4 is a diagram showing the reduced viscosities of the paste of the present invention, a suspension of modified egg white protein particles and an aqueous solution of xanthane gum.

Explanation of Reference Numerals

1 ... inner cone; 2 ... outer cone; 3 ... driving means for inner cone; 4 ... device for controlling the clearance between inner and outer cones; 5 ... inlet for inner cone-cooling water; 6 ... outlet for inner cone-cooling water; 7 ... inlet for outer cone-cooling water; 8 ... outlet for outer cone-cooling water; 9 ... inlet for introducing raw composition; 10 ... outlet for discharging paste; 11 ... air vent hole.

Best Mode for Carrying Out the Invention

The present invention will hereunder be described in more detail.

[Raw Carrageenan]

Carrageenan comprises sulfated polysaccharides obtained by extracting seaweeds represented by red algae with hot water and there have been known various types of carrageenan products whose properties are considerably different from one another. Among these, λ-carrageenan having a high degree of sulfation is used as a thickener, but does not have an ability of gellation. On the other hand, x-carrageenan comprises, as principal components, 1,3-bonded D-galactose-4-sulfate and 1,4-bonded 3,6-anhydro-D-galactose, but the properties thereof considerably vary depending on the kinds of starting seaweeds and production methods. It is believed that the 2-position of 1,4-bonded 3,6-anhydro-D-galactose is sulfated in the carrageenan named ι-carrageenan which has an ability of gellation like x-carrageenan.

All types of carrageenan products may give viscous aqueous solutions at a concentration of not more than 10% by weight by heating to a temperature of not less than 70 ~ 80 °C in the presence of a proper kind of associated cation in an appropriate concentration. In respect of the same kind of carrageenan products, the viscosities of the solutions thereof are surely high, as the concentrations thereof increase. It is seldom that a mechanical shearing force is applied to the highly viscous solution during a teatment thereof. Moreover, the inventors of this invention have widely investigated the effect of the treatment performed under the action of such shearing force while changing the kinds and concentrations of carrageenan products as well as the kinds of associated cations.

It is generally quite difficult to incorporate a carrageenan-containing composition into an emulsion food through a mechanical treatment. More specifically, if carrageenan having an ability of gellation is dissolved in, for instance, water with heating at a gelling concentration and then allowed to stand for cooling the solution, the solution of course causes gellation. Such gel cannot be converted into paste since gel particles still remain even if it is finely pulverized or simply gives paste having a rough feel. A 5% by weight aqueous solution of carrageenan was cooled to give gel, then manually cut into 2 mm square cubes, followed by addition of an equal volume of water and a treatment with a homogenizer at 20,000 rpm, but the cubes were not crushed into finer particles.

Nevertheless, the inventors of this invention have found out that paste having smooth taste and texture can be obtained by first heating an aqueous composition containing carrageenan in an amount of not less than 1.5% by weight to dissolve the carrageenan and then successively cooling the solution down to a temperature less than the gelling temperature of the composition while applying a mechanical shearing force thereto.

The carrageenan used in the present invention mainly comprises $x$-carrageenan. More specifically, the carrageenan used in the invention has a $x$-carrageenan content of more than 50% by weight and preferred are carrageenan products each having a $x$-carrageenan content as high as possible. The $x$-carrageenan content is in general not less than 60% by weight, preferably not less than 70% by weight, more preferably not less than 90% by weight and most preferably 100% by weight.

The carrageenan used herein is preferably carrageenan products having a high $x$-carrageenan content such as those extracted from a seaweed Eucheuma Cottonii or Chondrus Crispus or mixture thereof, with that extracted from Eucheuma Cottonii being most preferred.

If a solution obtained by dissolving carrageenan in hot water is cooled without any treatment, stable gel is formed. However, if the carrageenan solution is cooled to a temperature lower than the gelling temperature thereof while application of a mechanical shearing force to the carrageenan solution is initiated at an instance when the temperature of the solution is still high, i.e., the carrageenan is still dissolved in the solution, the solution forms glue-like paste without undergoing gellation. This paste exhibits bulky and smooth taste and texture and good stability, and never undergoes gellation unless it is again dissolved with heating and cooled without applying any shearing force.

The carrageenan concentration of the paste of the present invention ranges from 1.5 to 10% by weight and preferably 3 to 7% by weight. If the carrageenan content is equal to that currently used, i.e., not more than about 1% by weight, only watery and less viscous paste is formed. Paste which can impart an existing feel to the mouth and exhibits properties of foods that can be called foods different from those of beverages, i.e., so-called bulky paste can be prepared by treating an aqueous solution having a high carrageenan concentration on the order of 1.5 to 10% by weight. The paste exhibits a more improved bulky feel and has depth in the taste and texture as the carrageenan concentration increases, but the shearing and cooling treatments gradually become difficult in proportion to an increase of the carrageenan concentration and paste having a rough feel is formed. For this reason, the carrageenan concentration is desirably equal to or less than 10% by weight.

It has been known that the physical properties of carrageenan in general vary depending on the kinds and concentrations of associated cations.

In the production of the paste of the present invention, the gel strength thereof must not necessarily be high and may be controlled so as to be adapted for individual applications. It is sometimes preferred that the gel strength thereof be not too high in order to obtain paste having smooth taste and texture. However, the paste of the present invention must have excellent stability. Appropriate selection of the kinds and concentrations of carrageenan products and the kinds and concentrations of associated cations is important to obtain paste simultaneously having, for instance, excellent stability, excellent taste and texture and excellent viscosity characteristics.

As carrageenan products, there have been known $\mu$-carrageenan, $\nu$-carrageenan and $\theta$-carrageenan in addition to $x$-carrageenan, $\iota$-carrageenan and $\lambda$-carrageenan. Among them, $x$-carrageenan and $\iota$-carrageenan have widely been used because of their high gelling ability.

$x$-Carrageenan comprises, as principal components, polysaccharides having 1,3-bonded D-galactose-4-sulfate and 1,4-bonded 3,6-anhydro-D-galactose as structural units, but the composition thereof is not always constant and spreads over a certain range since it is an extract from natural seaweeds. Some of the $x$-carrageenan products have a sulfate residue at the 2-position of 1,4-bonded 3,6-anhydro-D-galactose at a certain rate, those having the rate of not less than 90 mole% are assigned to $\iota$-carrageenan and physical properties thereof are different from those of $x$-carrageenan. In general, those except for $\iota$-carrageenan are all called $x$-carrageenan.

$\iota$-Carrageenan carrying calcium ions as associated cations forms paste having high gel strength, but is confirmed to be insufficient in stability as proved by the stability test, as will be detailed below, which comprises the steps of allowing to stand at 35°C for two days and then bringing back to room temperature

5

and is, therefore, unsuitable as raw carrageenan used in the invention.

Among the *x*-carrageenan products, the use of those which comprise 1,4-bonded 3,6-anhydro-D-galactose units sulfated at the 2-position at a rate of more than 40 mole% are not preferred.

On the other hand, the *x*-carrageenan products extracted from red algae, Eucheuma Cottonii or Chondrus Crispus, are suitable for the production of the paste of the present invention, but carrageenan products extracted from Eucheuma Spinosum have high contents of *ι*-Carrageenan and therefore, are not suitable as raw carrageenan used in the present invention.

λ-Carrageenan is often extracted together with *x*-carrageenan during a process for extracting raw seaweeds. If *x*-carrageenan thus extracted has a high content of λ-carrageenan, the latter should be removed, but any problem does not arise if the content thereof is low. λ-Carrageenan can easily be removed by washing carrageenan powder with a 2.5% KCl aqueous solution in the usual manner or by separating λ-carrageenanduring the process for precipitating carrageenan from the extract obtained after the extraction process.

As has been discussed above, stable paste can be obtained through the use of a carrageenan product mainly comprising *x*-carrageenan as the carrageenan component thereof and, in particular, it is preferred to select those having a low degree of sulfation at the 2-position of 1,4-bonded 3,6-anhydro-D galactose unit as the carrageenan component.

[Associated Cations]

*x*-Carrageenan undergoes gellation in the presence of cations such as potassium, sodium and/or calcium ions. In the process for preparing paste of the present invention, the potassium ion concentration is most closely related to the formation of gel particles and if the potassium ion concentration is extremely high, gel particles are easily formed and become a cause of the formation of paste having a rough feel. On the other hand, sodium ions have almost no influence on the rough feel of the paste and calcium ions likewise have only a slight influence on the rough feel of the paste.

As has been discussed above, potassium ions have a tendency to cause formation of gel particles, but the use of potassium ions are inevitable to prepare the stable paste of the present invention. In the paste of the invention, the concentration of potassium ions as the associated cations ranges from 2 to 30 parts by weight per 100 parts by weight of the carrageenan component. If the concentration thereof is beyond the range defined above, any paste having excellent stability cannot be prepared. In general, the carrageenan products per se used as ingredients often comprise potassium ions to a certain extent and therefore, the potassium ion content in the raw carrageenan is determined in advance to thus estimate the amount of potassium ions to be supplemented.

If the amount of potassium ions with respect to the amount of the carrageenan component is less than 2% by weight, problems arise. For instance, the resulting paste is insufficient in stability even when sufficient amounts of other cations are present in the system and the paste after storage has a rough feel in the taste and texture. For this reason, it is important to control the overall concentration of potassium ions even if other cations such as sodium and calcium ions are co-existent.

If the pasting process is sufficiently carried out, the resulting paste can be in a transparent and completely smooth state and can uniformly be diluted with water. The resulting diluent is in a uniform sol-like state, while if the pasting process is insufficiently carried out, the resulting paste looses smooth taste and texture and has a rough feel. This is because carrageenan gel particles are mixed in the resulting paste. In this case, the paste immediately after the pasting process already has a rough feel.

The rough feel cannot be eliminated from the paste which already includes gel particles and accordingly, such paste has a rough feel even if it is sufficiently subjected to any post-treatment such as stirring and/or emulsifying treatment. Therefore, it is necessary to prevent the formation of gel particles in order to prepare paste having smooth taste and texture.

The formation of gel particles can be reduced by increasing the shear rate, i.e., the mechanical shearing force to be applied, but there is a limit in the increase of the shear rate under cooling conditions. This is because an increase in the shear rate is accompanied by an increase in the heat release value and the cooling efficiency is correspondingly reduced. The increase of the heat release value can be controlled by addition of sodium ions. More specifically, the addition of sodium ions permits an increase of the shear rate without accompanying heat generation and an improvement in the throughput capacity of the apparatus. Therefore, it is preferred in the present invention to incorporate sodium ions as the associated cations into raw carrageenan in an amount ranging from 0.5 to 120% by weight, preferably 5 to 40% by weight based on the weight of the carrageenan. In general, the carrageenan product per se used as an ingredient often comprises sodium ions to a certain extent in addition to potassium ions and therefore, the

6

sodium ion content in the raw carrageenan is determined in advance to thus estimate the amount of sodium ions to be supplemented.

If a continuous pasting installation is used, conditions for pasting are further limited. In particular, the total potassium concentration of the system is more preferably set at a low level to make the most use of the capacity of the installation. In other words, if the pasting process is performed using a cooling type colloid-mill as will be described below, the total potassium concentration preferably ranges from 3 to 15% by weight based on the weight of the carrageenan. In this case, the pasting process is only slightly affected by the presence of sodium and calcium ions and therefore, the relative potassium concentration can be reduced by addition of sodium ions.

If the total potassium ion concentration exceeds 30% by weight based oh the weight of $x$-carrageenan, relatively smooth paste is sometimes obtained by carrying out the pasting process in a small scale. This is because the small scale pasting process permits an increase of the cooling area and hence the achievement of high cooling efficiency even at a high shear rate and this accordingly permits inhibition of gel particle-formation. If the pasting process is performed in an industrial scale, however, it is quite difficult to simultaneously satisfy both requirements for a high shear rate and high cooling efficiency in both of the continuous and batch-wise pasting processes.

The paste of the present invention is completely smooth to the touch with a finger. The presence of gel particles in the paste can easily be confirmed by microscopic observation of the paste diluted 2 to 4 times with water using a phase contrast microscope. The presence of gel particles having a large particle size can likewise be confirmed by filtering the paste diluted 2 to 4 times through a filter medium. However, if not less than 10% by weight of gel particles remain on, for instance, a filtering net having a mesh of 20 $\mu$m, it is noted that the paste has a rough feel when incorporated into foods which should satisfy the requirements of smooth taste and texture, such as mayonnaise, dressings and other creamy foods. If paste contains gel particles, it is again dissolved and subjected to a cooling treatment under the influence of shearing force.

[Method for Preparing the Paste of the Present Invention]

In a first step for preparing the paste for foods according to the present invention, carrageenan is dissolved in water with heating and at this stage, the carrageenan concentration of the resulting solution is adjusted to a concentration (gelling concentration) such that the solution causes gellation when it is allowed to stand for cooling. Those skilled in the art can easily determine such a gelling concentration for each given system by preparatory experiments, but the gelling concentration ranges from 1.5 to 10% by weight and preferably 3 to 7% by weight in the present invention. The time required for dissolving carrageenan with heating can be reduced if carrageenan is pulverized in advance and suspended in water prior to the dissolution thereof, with heating, in water or water containing, for instance, a potassium, sodium or calcium salt. Whether carrageenan is completely dissolved, with heating, or not can usually be evaluated visually.

The heating temperature and time are not particularly restricted so far as complete dissolution of carrageenan can be ensured, but the dissolution is in general carried out at a temperature of not less than 60 °C for a time of not less than 30 seconds, preferably 75 to 90°C for 1 to 40 minutes with stirring.

Incidentally, carrageenan commonly used, whether it may be $x$-carrageenan or $\iota$-carrageenan, cannot be uniform in molecular weight, is a polymer ensemble having a molecular weight distribution spreading over a range and often shows behaviors which differ from those predicted on the basis of the theoretical physical properties of a specific sample having a narrow molecular weight distribution. For instance, if an aqueous solution system of $x$-carrageenan is taken by way of example, the temperature observed when a viscous uniform solution is formed by completely dissolving gel while raising the temperature thereof is not identical to that observed when the resulting viscous solution is cooled to give gel. Therefore, it should be noted that if the dissolution of the gel is insufficient, gel particles remain in the resulting product and may become a cause of the formation of paste having a rough feel. The viscous solution may, if necessary, be filtered to remove gel particles and dust.

In any case, to obtain completely uniform paste, it is necessary to first sufficiently raise the temperature of the starting composition for complete dissolution of carrageenan and then cool the composition, while successively applying a shearing force till the system is stabilized (while holding the shear rate), down to a temperature less than the gelling temperature of the composition, preferably a temperature not less than 2 °C , more preferably not less than 5 °C and most preferably not less than 10 °C lower than the gelling temperature.

The shearing force may be batchwise or continuously applied to the system. When the shearing force is batchwise applied to the system using, for instance, a jacket type cutter mixer provided with a rotary blade for scraping away (examples of commercially available such mixers include "Stephan Cutter" UMC 5 Electronic available from Stephan Company), the peripheral speed of the stirring blade must be sufficiently high. When using "Stephan Cutter", the desired paste can, in general, be suitably prepared by adjusting the number of revolution of the stirring blade to the range of from about 1000 to 6000 rpm. In this respect, whether the gellation is inhibited or not and whether the desired paste is formed or not can visually be evaluated. Alternatively, the formation of paste can likewise be evaluated through sensory test with fingers and/or the tongue. If the concentration of a carrageenan solution is low and the molecular weight of the carrageenan is not so high, gellation may happen to occur, but the gel strength is low and therefore, a low peripheral speed can be used. However, it is usually preferred to sufficiently increase the peripheral speed for the purpose of increasing the shearing force. In such case, a large cooling area must be secured to thus efficiently dissipate heat generated through the application of the shearing force.

On the other hand, when the shearing force is continuously applied to the system, conventionally known apparatuses such as a colloid mill or scraping type heat exchanger may be used, but if either of the apparatuses may often be slightly modified or subjected to reconstruction adapted for each apparatus so as to increase the cooling area, increase the stirring speed or expand the aperture of slits or the range of pressure to be applied, the shearing force can frequently be enlarged, the control of the required cooling can be made easier and the production capacity of the apparatus can often be improved. It is also possible to use other means for applying a shearing force to the system, such as methods which make use of a shearing stress, use of disks rotating in opposite directions and a method for extruding the viscous solution through a narrow slit while applying a high pressure, in addition to the use of stirring machines. However, when using most common stirring blades, it is of great convenience to use several blades as observed in the "Stephan Cutter" and to be able to select considerably high rotational speed. To obtain a required shearing force, it is most preferred to increase the peripheral speed of the stirring blades by increasing the number of revolution.

If a supercooling phenomenon is locally caused on the cooled wall during cooling the carrageenan solution, the solution causes partial gellation and this becomes a cause of the formation of paste having a rough feel. Therefore, it is necessary to uniformly cool the solution while applying a sufficient shearing force to obtain desired paste. Gradual cooling of the solution is effective in case of batchwise process from the foregoing standpoint and the cooling speed is suitably controlled to the range of from 0.1 to 20°C/min and preferably 0.1 to 5°C /min. On the other hand, the use of a continuous apparatus such as a colloid mill permits the application of a sufficient shearing force and uniform cooling of the carrageenan solution and accordingly, the solution is not especially subjected to gradual cooling.

The cooling may be carried out by gradually adding liquid nitrogen or small pieces of dry ice or ice, but the desired purpose of the present invention can sufficiently be accomplished by cooling through heat transfer using cooling water. Good results can also be obtained by any combination of these cooling methods. It is of great convenience to carry out the cooling operation in vacuo or under reduced pressure since uniform cooling can be ensured without accompanying local supercooling.

If the cooling step is carried out through heat transfer surface for cooling, it is convenient to renew the heat transfer surface through the use of scraping blades since this permits an improvement of heat transfer efficiency and prevention of gel particle formtion on the heat transfer surface and the use of the scraping blades simultaneously permits application of a shearing force.

A substance can be heated with stirring or under the influence of a shearing force for the purpose of pasting, heat modification or other treatments thereof without any difficulty if the heating process satisfies required conditions. This is because the heating of the substance is accelerated by the application of a shearing force. In the present invention, it is needed to cool a carrageenan composition while applying a shearing force thereto, but it is not easy to simultaneously carry out cooling and shearing force-applying steps. In other words, the cooling is necessary for the removal of frictional heat generated by the action of the shearing force and for cooling the carrageenan composition per se.

An aqueous solution of carrageenan having a high temperature has a viscosity lower than that of glue-like paste and accordingly, frictional heat generated by vigorous stirring is low. However, the viscosity thereof increases as the temperature of the solution is reduced through cooling, a large amount of frictional heat is generated and on the contrary, the heat transfer efficiency of the cooling process is lowered. Therefore, the cooling of the carrageenan solution becomes more difficult. For this reason, it is necessary to improve the cooling efficiency through the use of a scraping system such as "Stephan Cutter" in the batchwise method to thus increase the flow rate of the composition near the cooling wall. In this batchwise method, however, the area involved in heat transfer per charge weight is reduced as the size of the apparatus increases. Therefore, it is difficult to carry out middle scale and large scale production processes while increasing the throughput capacity of the apparatus. This is because an increase in the size of the apparatus increasingly makes it difficult to satisfy requirements contrary to each other. A multi-stage method may be used as an effective means for solving the foregoing problem. More specifically, the cooling process can be divided into three stages, i.e., the first stage comprising cooling the composition from a high temperature at which the composition is still in a solution state to an instance immediately before the composition initiates pasting; the second stage comprising cooling the composition while applying a shearing force thereto to thus form paste; and the third stage comprising completely cooling the resulting paste. Thus, the composition can be processed under optimum conditions while changing the shear rate, the temperature of the cooling medium and the size of the apparatus used in each stage.

The inventors of this invention have conducted various studies to paste an aqueous carrageenan solution using a variety of apparatuses and as a result, have found out that the foregoing problems can be solved by the use of a continuous apparatus. Commonly known continuous apparatuses include, for instance, scraping type heat exchangers, kneaders and twin-screw extruders, but a high peripheral speed cannot be ensured when either of them is used alone, gel particles are accordingly solidified on the heat transfer surface and desired smooth paste cannot be prepared.

Fig. 1 shows an embodiment of an apparatus preferably used for carrying out the method of the present invention.

The apparatus is provided with a truncated cone-shaped inner cone 1 which is rotated by a driving means 3 and a fixed outer cone 2 and the clearance between the inner cone 1 and the outer cone 2 can be adjusted by a clearance-controlling device 4. The clearance preferably ranges from about 0.1 to 5 mm. It is desirable to form grooves or projections on at least one of the faces of the inner cone 1 and the outer cone 2 opposed to one another in order to increase the shearing force to be applied thereto. A cooling jacket is fitted to these inner and outer cones 1 and 2 to thus cool the contents through a cooling medium (it is usually sufficient to use water). More specifically, the contents are cooled by introducing cooling water through inlets 5 and 7 and discharging it through outlets 6 and 8.

The control of the clearance which is required when controlling the shearing speed during the process for cooling an aqueous solution of carrageenan to form paste through gellation can easily be performed by shifting the inner cone 1 along the axial direction. The aqueous carrageenan solution is introduced into the apparatus through an inlet 9, pasted by the action of the shearing force during passing through the clearance between the inner and outer cones 1 and 2 and discharged through an outlet 10. The heat generated during shearing is removed by the cooling water. In this apparatus, the peripheral speed of the outer periphery of the inner cone 1 is high on the large diameter side near the inlet 9 for the solution and low on the small diameter side near the outlet 10 for discharging the contents. Therefore, the peripheral speed is gradually reduced as the viscosity of the carrageenan solution to be processed increases through cooling and the quantity of generated heat can thus be reduced.

Moreover, the apparatus is designed such that the shearing force can be increased. In other words, grooves or projections are formed on the faces of the inner and outer cones 1 and 2 opposed to one another, i.e., the heat transfer surface. These grooves or projections permit inhibition of slip between the rotating surfaces and the liquid paste, and effective application of the shearing force. This results in effective inhibition of solidified particle-formation, which becomes a cause of the formation of paste having a rough feel, and improvement of the cooling effect of the appratus. The grooves is designed such that they do not run through the outlet portion (on the small diameter side). This is because solidified products which become a cause of a rough feel cannot pass through the portion. The shape and number of grooves may arbitrarily be selected.

The peripheral speed must be controlled to a level of not less than 5 m/sec in order to prevent formation of gel particles and to ensure a suffficient shearing force, through renewal of the heat transfer surface. However, if the peripheral speed is too high, the cooling effect becomes insufficient due to generation of frictional heat. Therefore, the peripheral speed is desirably not more than 30 m/sec. The peripheral speed and the clearance between the inner and outer cones are selected depending on the carrageenan concentration, the gelling temperature thereof, the degree of softness of the resulting paste product and the feed rate of ingredients, but the smaller the space, the smoother the resulting product.

When operating the apparatus, the clearance between the inner and outer cones 1 and 2 is established in advance, then the inner cone 1 is switched on to set the rotational speed to a predetermined level, cooling water is introduced into a jacket through the inlets to cool the inner and outer cones 1 and 2 and an ingredient is introduced into the apparatus. The feed rate of the ingredient is controlled by a pump while monitoring the smoothness of the product. The apparatus may be provided with an air vent 11 for removing the air mixed in the product.

Alternatively, the paste of the present invention can continuously be prepared through the use of a two-stage type "Stephan Cutter". The starting solution may be introduced into the apparatus after preparative cooling. The cooling water may efficiently be used by countercurrently passing through the jacket so that the third stage is maintained at the lowest temperature.

In addition, the paste of the present invention may likewise be prepared using a colloid-mill which is currently used in an emulsification-dispersion process for fat and oil phase/aqueous phase.

[Characteristics of the Paste of the Present Invention]

The paste of the present invention thus prepared is one for foods which has smooth taste and texture and a diluent obtained by diluting carrageenan such that the concentration thereof is equal to 1% by weight can substantially completely pass through a sieve having a JIS mesh of 20 $\mu$m. Moreover, the paste has a viscosity ranging from 300 to 25000 cP as determined under the following conditions:

Conditions for Viscosity Measurement

Device Used: HAAKE Viscometer (cone plate type viscometer)
Temperature of Sample Product: 25°C
Sensor System: PK5$^{0.5}$
Measuring Head: M$^5$
Control Unit: PG 242
The value obtained at a shear rate D of 100 sec $^{-1}$ is defined to be a viscosity value.

The viscoelastic properties of the paste of the present invention are distinctly different from those of the gel. For instance, the viscoelasticity of paste prepared by adjusting the carrageenan concentration to 6% by weight was determined using a compressive tensile tester ["Tensipressor" Model TTP-50BX (available from Takemoto Electric Co., Ltd.)] and as a result, there was observed stress characteristics free of any yield point unlike the gel having the same concentration. As shown in Fig. 2, the gel has an yield point (7537 g/cm$^2$ ) in stress intensity equal to about 120 times the maximum stress (62 g/cm$^2$ ) of the paste. On the other hand, the paste shows a negative stress (-54 g/cm$^2$ ) which is a viscous stress during pulling the plunger. As has been discussed above, the paste has properties quite different from those of the gel. The presence of this viscous stress indicates that the paste has properties peculiar thereto.

When evaluating the structure of the paste at the molecular level, the differential thermal analysis (DSC) may in general be used as an effective means. Thus, DSC analysis was carried out using the paste prepared in Example 3 as will be detailed below and finely pulverized gel prepared from carrageenan having the same composition for the purpose of comparison. The results thus obtained are plotted on Fig. 3. The patterns of the thermal behaviors of these samples are clearly different from one another and this indicates that there is a difference between the structures thereof. It is assumed that the paste has an intermolecular crosslinking state different from that observed in the usual gel state since the paste is prepared by cooling under the action of a shearing force and accordingly, when the paste is heated starting from room temperature, it absorbs a large quantity of heat while the crosslinking state is converted into that of the gel. This is clear from the fact that the quantity of absorbed heat is 3.0 mJ/mg for the paste, while that of the gel particles is 0.8 mJ/mg.

The paste of the present invention as such and a viscous solution obtained by diluting the paste with water can be cooled from ordinary temperature to a temperature falling within the chilled region, for instance, 5 °C without causing gellation and they can be allowed to stand without accompanying any structural change such as gellation although the thixotropic properties thereof are slightly increased. The usual carrageenan solution looses the fluidity through cooling even at a low concentration and therefore, foods stored under refrigerated conditions loose the appearance and taste and texture peculiar thereto during storage, but the carrageenan paste of the present invention does not suffer from such problem during storage. Therefore, the paste of the invention is suitable as a substitute for fat and oil components for foods stored under chilled conditions such as mayonnaise, salad dressings, sauces for salad, refreshing beverages, frozen deserts and margarine.

The carrageenan paste of the present invention was subjected to $^{13}$C-NMR spectroscopic measurement using a ferromagnetic field of 600 MG or 400 MG and found to have absorption spectra completely different from those observed for carrageenan which was in a completely dissolved condition. The paste shows absorption spectra at 104.6, 93.1, 82.4, 77.5, 75.1, 73.7, 73.4, 72.1, 70.3, 63.4, 62.4 and 61.2 ppm. The presence of these spectra is one of the indications which serve as evidences showing the fact that carrageenan is converted into paste and therefore, the completion of the pasting can be confirmed, based on the results of the $^{13}$C-NMR spectroscopic measurement.

As is clear from the foregoing results of the $^{13}$C-NMR spectroscopic measurement, the paste for foods according to the invention is not a solution of completely dissolved carrageenan. Fig. 4 shows the relation between the reduced viscosities $\eta_{rel}$ ($=\eta_{sp/c}$) observed on the paste of the invention and an aqueous solution of a similar polymer and the concentrations thereof. The reduced viscosity is effective as a means for investigating the condition of solute molecules in a dilute condition and the extent of intermolecular interaction can be estimated by examining the concentration-dependency of the reduced viscosity. As seen from Fig. 4, the reduced viscosity of an aqueous solution of xanthane gum as a representative polymer at a dilute condition linearly decreases in proportion to the reduction of the concentration thereof, while the viscosity of the paste of the invention shows a tendency different from that observed for the xanthane gum aqueous solution, i.e., it is constant or slightly increases at a concentration of approximately zero. This indicates that the paste of the invention shows an increase in the dimension of the molecular chain at a concentration of approximately zero (g/dl).

In addition, properties of the paste of the invention differ from those of a simple aqueous dispersion system (suspension) of particles. The value obtained by extraporating the reduced viscosity of a substance vs. concentration plot to zero concentration is called intrinsic viscosity which is used as an indication of the shape and size of the molecule thereof. Therefore, the difference in the intrinsic viscosity reflects the difference in molecular conditions. As seen from Fig. 4, the intrinsic viscosity of the paste of the invention was found to be about 70 (ld/g), while that of a suspension of fine particles of denatured egg white protein in water was very low on the order of about 0.1 (ld/g) although the protein was sufficiently finely pulverized to a particle size ranging from 0.5 to 2.5 $\mu$m.

Practically acceptable paste must have smooth taste and texture and stable and long lasting properties such as viscosity characteristics or the like. For this reason, it is desirable to confirm the stability of each paste by carrying out a stability test which comprises the steps of allowing it to stand at 35°C for 2 days, then bringing the temperature thereof back to room temperature of 20 °C and determining physical properties.

As a result of this stability test, paste which has a rough feel in taste and texture or which undergoes a change in viscosity is not practically acceptable or the applications thereof are considerably limited, while paste which does not any change in the physical properties examined by the test can be fit for considerably wide variety of uses. This is because foods are very rarely stored at a temperature of not less than 35°C over a long time period.

The paste for foods according to the present invention may, if necessary, comprise an acid such as acetic acid, citric acid, lactic acid and/or adipic acid, in particular, acetic acid in an appropriate amount, for instance, ranging from 0.01 to 30% by weight based on the weight of the paste to thus impart preservative quality to the paste. In this respect, the adjustment of pH of the paste to not less than 2.5 and not more than 5.5 can impact preservative quality to the paste without decomposition thereof with the acid.

The gellation of carrageenan can be accelerated by addition of gums such as locust bean gum and milk casein in an appropriate amount, for instance, ranging from 1 to 100% by weight on the basis of the weight of the paste. The kinds of the paste can be diversified by the addition of the foregoing additives. The paste thus prepared is quite suitable as paste to be incorporated into ice cream or other dairy products.

[Application of the Paste of the Present Invention to Foods]

There have been proposed a variety of methods for the production of low calorific foods through reduction of the fat and oil content of emulsion foods. For instance, there has been known a method in which polysaccharides are used as substitutes for the fats and oils, but the method is limited in the reduction of the calorie of foods. This is because, polysaccharides such as starch and glycogen are low calorific as compared with fats and oils, but the calorie thereof is about a half of the calorie of fats and oils. Certain natural polysaccharides used in low calorific foods has been known to have no calorific value or only a very low calorific value. It is also well-known that carrageenan products extracted and produced from red algae which is a kind of seaweeds are derivative of polysaccharides having no calorific value.

Since carrageenan has no calorific value, the use of the paste prepared therefrom permits reduction of calorific values of emulsion foods to the lowest level and control of the viscosity of these emulsion foods by selecting reasonable conditions for preparing the paste. Alternatively, physical properties of foods can likewise be controlled by adjusting the rate of added paste and thus the diversity of the paste can be increased.

Moreover, each food must satisfy requirements peculiar thereto even if it is a low calorific emulsion food whose fat and oil content is reduced. For instance, mayonnaise must satisfy requirements such as a moderate viscosity, free of foreign smell and flavour, good taste and preservative quality and stability of commodity. The mayonnaise would satisfy these requirements through the use of carrageenan paste as a substitute for the fat and oil component thereof, which can satisfy the requirements such that it does not give out any foreign smell and flavour, has a reasonable viscosity, is free of wateriness and has sufficient bulkiness.

These requirements can be satisfied by the use of the excellent paste prepared by the present invention. The paste for foods of the present invention is quite excellent in that the use thereof permits preparation of mayonnaise exhibiting, in particular, sufficiently stable viscosity, smooth taste and texture and bulky taste and flavour. In other words, the paste of the present invention is excellent in dispersibility in an aqueous phase and in affinity with proteins and carbohydrates and therefore, the best results can be expected when it is added or applied to foods.

On the other hand, a colloidal protein dispersion and colloidal dispersions of starch and gums were prepared and the taste and texture thereof were determined for the purpose of comparison with the paste of the present invention. As a result, there were clearly observed substantial difference in rough feel and powdery feel. Moreover, mayonnaise and sauces for salad prepared using these colloidal solutions were inspected for the taste and texture and it was found that the protein, starch and gums were distinctly inferior to the paste of the present invention since the former had high rough feel and powdery feel.

When low calorific mayonnaise having a low oil content is prepared using the paste of the present invention, it is sufficient to prepare mayonnaise by the usual manner while simply substituting the paste for the oil component of the mayonnaise. It is of course possible to adjust the amount of yolk and/or vinegar to be added and to adjust taste and flavour through addition of seasonings depending on the liking, in proportion to the rate of reduction of the oil content.

In the preparation of the paste of the present invention, the paste is sufficiently heated during dissolving carrageenan in water and the heating process also serves as a sterilization process. Therefore, the paste may be added to mayonnaise without any post-treatment.

When using paste having a high carrageenan concentration, the rate of water or vinegar to be incorporated into mayonnaise may be increased during production thereof or when using paste having a low carrageenan concentration, the viscosity of the product may be increased by addition of a thickening agent.

Low calorific mayonnaise products having a reduced fat and oil content were prepared through addition of paste having various carrageenan concentrations and inspected for the wateriness and palatability and the viscosity most suitable for mayonnaise was determined. As a result, the product obtained from the paste having a carrageenan concentration of 0.5% (% by weight) was rated low in wateriness and slightly low in the viscosity. On the other hand, all of the paste products having carrageenan concentrations of 2%, 4% and 6% permitted the production of mayonnaise products excellent in taste and texture. In particular, those having carrageenan concentrations of 4% and 6% permitted the production of products having completely satisfactory palatability, bulkiness, flavour and viscosities most suitable for mayonnaise. The resulting mayonnaise exhibits stable physical properties even when it is stored at a low temperature at which it is not frozen, i.e., it causes neither gellation nor solidification, does not have impaired taste and texture and does not have a rough feel. This is because the viscosity characteristics of the carrageenan paste are stable over a wide range of the carrageenan concentration.

When the paste of the present invention is used for preparing mayonnaise products, sauce products such as sauce tartar and tomato sauce and dressings for salad, bases for sauce or the like may be prepared, in advance, from ingredients other than the carrageenan paste, then the paste is added, followed by mixing or emulsification process; or all of the ingredients except for a part of spices may be mixed to give a premix and then treated by an emulsifying device such as a colloid-mill. This is because these mayonnaise and sauce products or the like should be subjected to an emulsification process in due course.

In any case, the products should not be subjected to any high temperature treatment such as a sterilization after the addition of the paste of the invention. This is because problems arise. For instance, carrageenan is redissolved and causes gellation or phase separation.

The paste of the present invention can likewise be added to dairy products such as ice cream or whipped cream. In this case, the paste used may comprise casein which may ensure more uniform miscibility.

EXAMPLE

The present invention will hereunder be described in more detail with reference to the following Examples.

Example 1

Eucheuma Cottonii as a raw seaweed was extracted with hot water, followed by separation through the alcohol precipitation method, drying and pulverization to give a carrageenan product ($x$-carrageenan content: 100% by weight). Then there were prepared aqueous compositions A, B, C, D, E and F each having a carrageenan concentration of 5% by weight, a sodium ion concentration of 8.3 g/l (16%) and a calcium ion concentration of 0.2 g/l (0.1%) and whose potassium ion concentration was variously changed as shown in Table 1. The concentrations of the potassium, sodium and calcium ions were adjusted by addition of potassium chloride, sodium chloride or calcium chloride.

Table 1

|  | A | B | C | D | E | F |
|---|---|---|---|---|---|---|
| Potassium Ion Concn. (g/l) | 0.3 (0.7%) | 1.7 (3.0%) | 3.1 (6.3%) | 4.5 (9.2%) | 5.9 (12%) | 15 (30%) |
| Total Cation Concn. (g/l) | 8.8 (16%) | 10.2 (19.1%) | 11.6 (22.4%) | 13.0 (25.3%) | 14.4 (28.1%) | 23.5 (46.1%) |

Each composition (2 Kg) was heated to 80°C to dissolve the carrageenan and then cooled while using a cutter mixer provided with a jacket ("Stephan Cutter" UMC 5 Electronic available from Stephan Company) at a rotational speed of 1500 rpm and a peripheral speed of 12 m/sec to give each paste. The solution was cooled down to 40 °C at a cooling rate of about 2 °C/min. The resulting paste products were inspected for smoothness of taste and texture and bulkiness through the sensory test and the viscosities thereof were likewise determined.

On the other hand, each paste was diluted with pure water to a concentration of 1% by weight and then filtered through a sieve having a mesh of 20 μm (JIS unit) to inspect the paste for the presence of residues. Moreover, each paste was diluted to a concentration of 0.1, 0.15 and 0.2% by weight, then the reduced viscosity $\eta_{rel}$ was determined by measuring specific viscosity thereof at 25°C using an Ubbellohde viscometer and the intrinsic viscosity was determined by the extraporation method. In addition, each paste was stored at 35°C for 24 hours and then cooled to room temperature to examine the stability thereof. The results thus obtained are listed in Table 2.

Table 2

|  | A | B | C |
|---|---|---|---|
| **Sensory Test** |  |  |  |
| Smoothness of Taste and Texture | not good | good | excellent |
| Bulkiness | -- | good | excellent |
| Filterability with Sieve | unfilterable | complete passage | complete passage |
| Intrinsic Viscosity | not determined | 36 | 33 |
| Stability | (*) | (**) | good |

(*): The paste caused gellation during withdrawing.

(**): The paste slightly lost smoothness, but could be acceptable.

Table 2 (continued)

|  | D | E | F |
|---|---|---|---|
| **Sensory Test** |  |  |  |
| Smoothness of Taste and Texture | excellent | good | acceptable |
| Bulkiness | excellent | excellent | excellent |
| Filterability with Sieve | complete passage | complete passage | 5% residues |
| Intrinsic Viscosity | 31 | 32 | 23 |
| Stability | good | good | good |

These results indicate that any stable paste cannot be prepared when the potassium ion concentration is less than 2% by weight based on the weight of the carrageenan and that the paste is liable to loose the smoothness in taste and texture as the potassium ion concentration increases.

With regard to the smoothness of taste and texture, it was found that paste which comprised residues remaining after it was filtered through a standard sieve was not acceptable and that the intrinsic viscosity of such paste was simultaneously reduced.

To determine gel strength of these compositions, separate samples thereof were dissolved with heating, allowed to stand and cooled to give gel. Each gel was inspected for the gel strength using a compressive

14

tensile tester ["Tensipressor" Model TTP-50BX available from Takemoto Electric Co., Ltd.)] and it was found that the gel strength ($g/cm^2$) and the smoothness in taste and texture of the paste show an inverse correlation. The results are listed in Table 3.

Table 3

|  | A | B | C | D | E | F |
|---|---|---|---|---|---|---|
| Gel Strength After Standing to Cool | not gelled | 4,200 | 5,040 | 5,100 | 6,300 | 7,060 |

The resulting 4 kinds of paste prepared from the compositions B, C, D and E had yield points in the stress curves shown in Fig. 2.

Moreover, the composition E was gradually treated while increasing the rotational speed of "Stephan Cutter" (UMC 5 Electronic) and reducing the cooling speed to 1°C/min to give paste. As a result, there was prepared a paste product having smooth taste and texture and quality almost identical to that of the paste product prepared from the composition C. However, it is difficult to use such conditions for mechanical treatment in an industrial scale. When the composition E was treated by a cooling type colloid-mill, any paste having smooth taste and texture could not be prepared.

Example 2

An aqueous composition having a carrageenan concentration of 5% by weight and a potassium ion concentration of 0.3% by weight was prepared using a carrageenan product ($x$-carrageenan content: 100% by weight) prepared by extracting Eucheuma Cottonii with hot water and then subjected to the alcohol precipitation method. The composition had a sodium ion concentration of 0.05% by weight and a calcium ion concentration of 0.07% by weight, but the sodium ion concentration was adjusted to 0.64% by weight by addition of 1.5% by weight of common salt. Thus, the total cation concentration was 20% by weight based on the weight of the carrageenan.

The sulfate residue content of the carrageenan was found to be 20.2% by weight and the content of sulfate residue at the 2-position of 3,6-anhydro-D-galactose was found to be not more than 1%.

To a viscous solution of carrageenan obtained by extracting another seaweed, Chondrus Crispus with hot water, there was added an equal volume of a 4.0% by weight potassium chloride aqueous solution, followed by stirring and allowing to stand for one hour. Insoluble $x$-carrageenan was precipitated from the mixture followed by removal of the supernatant through decantation, washing with a 2.5% by weight potassium chloride aqueous solution, drying to thus isolate $x$-carrageenan.

The carrageenan isolated from Chondrus Crispus ($x$-carrageenan content: 100% by weight) was dispersed in pure water to give a 5% by weight solution and then potassium chloride and sodium chloride were added to the solution to control the potassium and sodium ion concentrations to 0.3% by weight and 0.64% by weight respectively.

The sulfate residue content thereof was analyzed and found to be 25.2%. In addition, the content of sulfate residue at the 2-position of 3,6-anhydro-D-galactose was found to be 7%.

On the other hand, an aqueous composition having a carrageenan concentration of 5% by weight was prepared from Carraginine CS-56 available from Marine Colloid Company as $\iota$-carrageenan and then 0.3% by weight of potassium chloride and 1.4% by weight of common salt were added thereto to control the cation concentration of the composition.

These compositions (2 Kg each) were heated to 80°C to completely dissolve and then cooled down to 30°C under a shearing force of 1500 rpm and at a cooling speed of about 2°C/min using the foregoing "Stephan Cutter" to give paste products. As a result, good paste products were prepared from the $x$-carrageenan products isolated from Eucheuma Cottonii and Chondrus Crispus, while the $\iota$-carrageenan did not provide a paste product since it underwent gellation during withdrawal.

Moreover, the paste products prepared from the $x$-carrageenan were subjected to a stability test which comprised allowing to stand at 35°C for 24 hours and then bringing back to room temperature and found to be stable. The results are summarized in Table 4.

Table 4

| | $\kappa$ -carrageenan | | $\iota$ -carrageenan |
|---|---|---|---|
| | Eucheuma Cottonii | Chondrus Crispus | |
| Paste Viscosity(cps) | | | |
| 5%* | 4,000 | 8,200 | gellation upon withdrawal |
| 3%** | 1,500 | 3,000 | cannot be diluted |
| 1.5%** | 230 | 270 | cannot be diluted |
| Filterability of 1% Soln. Diluted with Water Through Sieve | complete | complete | cannot be diluted |
| Intrinsic Viscosity(30℃) | 32.0 | 33.5 | -- |
| Stability | good | good | -- |

Moreover, mayonnaise products were prepared using these paste products.

The composition of the mayonnaise products was as follows: 33 parts of salad oil, 10 parts of vinegar, 7 parts of yolk, 1.5 part of common salt, 2 parts of sugar, 26.5 parts of each paste and 20 parts of water. All of these ingredients were mixed together in advance and then passed through a colloid-mill at a rotational speed of 3000 rpm and a clearance of the slit of 0.3 mm.

Separately, a mayonnaise product free of any paste was prepared from 66 parts of salad oil, 10 parts of vinegar, 7 parts of yolk, 1.5 part of common salt, 2 parts of sugar and 13.5 parts of water and this was used as a control.

Mayonnaise products prepared using two kinds of $x$-carrageenan paste products were comparable to the control product in smoothness, flavour, bulkiness, pleasantness of overall taste and appearance peculiar to mayonnaise.

The mayonnaise product having the same composition and prepared in the same manner using $\iota$-carrageenan had a rough feel in taste and texture and accordingly was clearly inferior to the product of the present invention.

Example 3

To an aqueous composition comprising 5% by weight of the carrageenan ($x$-carrageenan content: 100% by weight) used in Example 1, there was added 3.5% by weight of common salt to thus adjust potassium ion, sodium ion and calcium ion concentrations thereof to 25% by weight (5% by weight based on the weight of the carrageenan), 1.42% by weight (28% by weight based on the weight of the carrageenan) and 0.065% by weight (1.3% by weight based on the weight of the carrageenan) respectively. The total concentration of potassium, sodium and calcium ions was 34.3% by weight based on the weight of the carrageenan.

16

The composition was first heated to 80°C to completely dissolve the carrageenan, then cooled down to 60 °C by passing the solution through a scraping type heat exchanger and cooled under the action of a shearing force by continuously passing the solution through a cooling type colloid-mill as shown in Fig. 2. The temperature of the cooling water was set at 15 °C and a sufficient amount of cooling water was used. The clearance between the inner and outer cones 1 and 2 and the peripheral speed of bladed were changed as detailed in Table 5. Good results were obtained at the ratio of the rotational peripheral speed of the blade to the clearance of not less than 5. The narrower the clearance, the smoother the resulting product, but the throughput capacity of the apparatus was reduced as the clearance was reduced. In this case, good results were also obtained at the ratio of the peripheral speed to the clearance of not less than 5. On the other hand, when the ratio of the peripheral speed to the clearance was less than 5, the resulting paste had a rough feel.

## Table 5

| Test | Clearance (a) | Peripheral Speed (b) | Ratio:(a)/(b) | Calorific Value During Cooling |
|------|---------------|----------------------|---------------|--------------------------------|
| No.  | (mm)          | (m/s)                |               | (KCal/h)                       |
| T3-1 | 3.2           | 10                   | 3.1           | 100                            |
| T3-2 | 3.2           | 20                   | 6.3           | 300                            |
| T3-3 | 1.0           | 7.5                  | 7.5           | 350                            |
| T3-4 | 0.5           | 5                    | 10            | 450                            |
| T3-5 | 0.25          | 5                    | 20            | 550                            |

## Table 5 (continued)

| Test | Throughput Capacity | Quality of Paste | |
|------|---------------------|------------------|---|
| No.  | (kg/h)              | Smoothness | Overall Evaluation |
| T3-1 | 40                  | ✕ | ◯ |
| T3-2 | 27                  | ◯ | ◯ |
| T3-3 | 23                  | ◯ | ◯ |
| T3-4 | 15                  | ◎ | ◎ |
| T3-5 | 10                  | ◎ | ◎ |

Quality of Paste: ✕ : unacceptable; ◯ : acceptable;

◎ : excellent.

A paste product was prepared using a cooling type colloid-mill similar to that used above, but whose grooves of the inner and outer cones 1 and 2 ran through the outlet portion thereof. As a result, the paste thus prepared was found to have a rough feel due to the presence of particles formed through gellation in the grooves and mixed therein.

Example 4

Using the same cooling type colloid-mill used above [the inner cone had a diameter at the longer diameter side (inlet side) of 11 cm and a diameter at the shorter diameter side (outlet side) of 8 cm], various aqueous compositions comprising different components were treated while adjusting the clearance between the inner and outer cones 1 and 2 to 1.0 mm and the rotational peripheral speed to 9 m/sec. Carrageenan was dissolved with heating to 80 °C so that the carrageenan concentration was 5% by weight, then pre-cooled and passed through the cooling type colloid-mill. The foregoing various components included a composition which comprised 5% by weight of the carrageenan isolated from Eucheuma Cottonii ($x$-carrageenan content: 100% by weight) and 5% by weight of potassium ions based on the weight of the carrageenan and common salt which was added to adjust the sodium ion concentration and the total cation concentration of the composition. The amounts of these components and ion concentrations are summarized in Table 6. Each aqueous composition was first heated to 80 °C to dissolve the carrageenan, then passed through a wire mesh strainer of 80 mesh, thereafter pre-cooled to 60°C by passing through a scraping type heat exchanger, prior to the treatment with the cooling type colloid-mill.

## Table 6

| Test | Amount of Added Common Salt | Sodium Ion Concn. | Calorific Value During Cooling | Throughput Capacity |
|------|------|------|------|------|
| No. | (g/l) | (g/l) | (KCal/h) | (kg/h) |
| T4-1 | 0 | 0.2 | 800 | 3 |
| T4-2 | 10 | 4 | 600 | 7 |
| T4-3 | 20 | 8 | 500 | 13 |
| T4-4 | 30 | 12 | 400 | 20 |
| T4-5 | 38 | 15 | 350 | 23 |
| T4-6 | 63 | 25 | 500 | 15 |

## Table 6 (continued)

| Test | Quality of Paste | | | |
|------|------|------|------|------|
| | Viscosity | Smoothness | Bulkiness | The Others |
| No. | (cps) | | | |
| T4-1 | 4400 | almost smooth | acceptable | |
| T4-2 | 4100 | smooth | good | |
| T4-3 | 3600 | smooth | good | |
| T4-4 | 2900 | smooth | good | |
| T4-5 | 2600 | smooth | good | |
| T4-6 | 3500 | smooth | good | powdery feel |

As seen from the data listed in Table 6, the calorific value during cooling is reduced and the throughput capacity is also improved by the addition of sodium ions.

Example 5

Paste products were prepared using the same apparatus and method used in Example 4 while variously changing the concentration of the carrageenan isolated from Eucheuma Cottonii (x-carrageenan content: 100% by weight) within the range of from 1.5 to 9% by weight as shown in Table 7.

Physical properties of the resulting paste products were evalusted and it was found that paste products having a carrageenan concentration ranging from 3 to 7% by weight were excellent in quality. Moreover, if the carrageenan concentration was less than 3% by weight, the processing characteristics and throughput capacity of the colloid-mill were satisfied, but the cation concentration relative to the carrageenan concentration increased. Therefore, the paste had a tendency to have a highly salty taste. The paste must be added to emulsion foods in a large quantity because of its viscosity and for this reason, the paste is rather difficult to use.

Table 7

| Carrageenan Concn. (wt%) | Calorific Val. During Cooling (KCal/h) | Throughput Capacity (kg/h) | Quality of Paste | | |
|---|---|---|---|---|---|
| | | | Viscosity (cps) | Smoothness | The Others |
| 1.5 | 75 | 40 | 430 | smooth | too salty |
| 3 | 150 | 35 | 1200 | smooth | good taste |
| 4 | 300 | 25 | 2000 | smooth | good taste |
| 7 | 600 | 7 | 4100 | smooth | good taste |
| 9 | 800 | 2 | 5600 | rough feel | high viscosity difficult to treat |

Example 6

Aqueous solutions having various carrageenan concentrations were prepared using a carrageenan product (GENUGEL SWG-J available from Copenhagen Pectin Company; $x$-carrageenan content: 100% by weight; potassium ion content: 5% by weight; content of the sum of Na and Ca ions: 5% by weight) and then pasted at 2000 rpm using "Stephan Cutter" to determine difficulty of pasting and properties of the resulting paste. The results thus obtained are summarized in Table 8.

Table 8

| Carrageenan concn. (wt%) | Viscosity at 80°C (cps) | Difficulty of Pasting | Properties of the Resulting Paste |
|---|---|---|---|
| 0.5 | 50 | Stirring, cooling are easy, but any paste cannot be produced. | watery; separation of water is observed at upper portion upon allowing to stand. |
| 1.5 | 92 | easy | soft paste |
| 4 | 750 | easy | bulky and good |
| 6 | 3000 | possible | highly bulky and good |
| 8 | 28300 | possible | highly bulky and good |
| 12 | quite high concentration | difficult | bulky, but having a slight rough feel |

As seen from the data listed in Table 8, only watery paste of low viscosity was prepared when the carrageenan concentration was not more than about 1% by weight (commonly used concentration). Paste having an existing feel in the mouth and properties peculiar to foods, which differ from those of beverages, i.e., having so-called bulkiness can be prepared from an aqueous solution having a high carrageenan concentration on the order of 1.5 to 10% by weight. The bulkiness is improved and paste which has depth in taste and texture can be obtained as the carrageenan concentration increases, while the treatment under a shearing force and the cooling treatment become difficult and paste having a rough feel is produced. For this reason, the carrageenan concentration is desirably not more than 10% by weight. As already discussed above, the carrageenan concentration of the paste according to the present invention ranges from 1.5 to 10% by weight and preferably 3 to 7% by weight.

Example 7

An aqueous composition was prepared using a carrageenan product (GENUGEL SWG-J available from Copenhagen Pectin Company; $x$-carrageenan content: 100% by weight; potassium ion content: 5% by weight; content of the sum of Na and Ca ions: 5% by weight) and a carrageenan product prepared by extracting Chondrus Crispus with hot water and then treating the resulting crude carrageenan solution with a 2.5% potassium chloride aqueous solution ($\lambda$-carrageenan content: 100% by weight; potassium ion content: 2% by weight; content of the sum of Na and Ca ions: 5% by weight), while changing the ratio: $x$-carrageenan/$\lambda$-carrageenan within the range of from 100:0 to 50:50 and adding common salt to thus adjust the total carrageenan concentration to 5% by weight, potassium ion concentration to 0.3% by weight and sodium ion concentration to 1.4% by weight. A paste product was prepared by treating the aqueous composition with "Stephan Cutter" under the conditions described in Example 1 and the resulting paste was inspected for the quality. The results thus obtained are listed in Table 9.

Table 9

| Test No. | Carrageenan $x/\lambda$ Ratio | Quality of Paste | | Filterability Through Sieve | Stability |
|---|---|---|---|---|---|
| | | Bulkiness | Overall Evaluation | | |
| T5-1 | 100/0 | excellent | excellent | complete passage | good |
| T5-2 | 90/10 | excellent | excellent | complete passage | good |
| T5-3 | 80/20 | good | good | complete passage | good |
| T5-4 | 70/30 | acceptable | acceptable | complete passage | acceptable |
| T5-5 | 60/40 | acceptable | acceptable | complete passage | acceptable |
| T5-6 | 50/50 | unacceptable | unacceptable | complete passage | rough feel |

As seen from the data listed in Table 9, production of paste having an existing feel in the mouth, i.e., so-called bulkiness becomes difficult as the rate of $\lambda$-carrageenan increases and the paste gives a glue-like sticky feel to the mouth. The paste has low stability as determined by allowing to stand at 35 °C for 24 hours and then bringing back to room temperature. Therefore, it can be concluded that the carrageenan product used in the invention is preferably those having a high $x$-carrageenan content and most preferably those having a $x$-carrageenan content of 100% by weight.

Example 8

A mayonnaise product was prepared using the paste having smooth taste and texture prepared in Example 3 (Test No. T3-2). In this respect, the fat and oil content of the mayonnaise was reduced to 25% by weight of that currently used. More specifically, the composition of the mayonnaise was as follows: 18 parts of salad oil, 14 parts of yolk, 15 parts of vinegar, 3 parts of sugar, 0.3 part of locust bean gum, 0.5 part of sodium glutamate, 3 parts of lemon juice, 35 parts of the paste and 11.2 parts of pure water. All of the ingredients were first pre-mixed and then treated with a colloid-mill.

Comparative Example 1

The same procedures used in Example 8 were repeated except that 1 part of konjak powder [available from Gunma Glucomannan Co., Ltd.; fine powder obtained by classifying through a sieve having a mesh of 63 $\mu$m (JIS unit)] swollen with 34 parts of pure water overnight was substituted for 35 parts of the paste to give a mayonnaise product.

Comparative Example 2

The same procedures used in Example 8 were repeated except that glue obtained by heating a mixture of 5 parts of corn starch and 30 parts of pure water to 90 °C was substituted for 35 parts of the paste to give a mayonnaise product.

Comparative Example 3

The same procedures used in Example 8 were repeated except that a mixture of 10 parts of finely pulverised denatured egg white protein (particle size: 1.0 $\mu$) and 25 parts of pure water was substituted for 35 parts of the paste to give a mayonnaise product. The resulting mayonnaise product had bulkiness almost comparable to that of the product prepared in Example 8, but was clearly inferior thereto in smoothness of taste and texture. The disadvantage could not be eliminated even when the rate of the denatured egg white protein to be added was changed.

The results are summarized in the following Table 10.

## Table 10

| Ex. No. | Kinds of Additive | Smoothness of Taste and Texture | Flavour |
|---|---|---|---|
| 8 | Paste of Invention | identical to usual mayonnaise | good |
| 1 * | konjak | rough feel | flavour different from mayonnaise |
| 2 * | corn starch | highly sticky as compared with usual mayonnaise | acceptable |
| 3 * | denatured egg white protein | rough feel | acceptable |

## Table 10 (continued)

| Ex. No. | Bulkiness | Viscosity Characteristics | Overall Score |
|---|---|---|---|
| 8 | good | excellent | 5 point |
| 1 * | low | low viscosity; low shape retention | 1 point |
| 2 * | acceptable | having shape retention, but having plump feel | 3 point |
| 3 * | good | low viscosity; low shape retention | 2.5 point |

*: Comparative Example

The viscosity of the mayonnaise product prepared in Example 8 was determined at room temperature (25°C) and that of the product whose temperature was adjusted to 5 °C by storing in a cold room for one day was also determined using B type viscometer. The viscosity thereof showed almost no change at both room temperature and 5°C . Moreover, the thixotropic properties thereof represented by a viscosity reduction observed under a high rotational frequency were ideal since there was not observed any difference. The results are listed in the following Table 11.

22

Table 11

|  | 5 °C | 25 °C |
|---|---|---|
| 6 rpm | 2200 cps | 2150 cps |
| 60 rpm | 1080 cps | 970 cps |

Example 9

Mayonnaise products were prepared while a half of the fat and oil components was replaced with the paste products (Test Nos. T4-1 to T4-6) having smooth taste and texture and prepared in Example 4.

Example 10

Salad dressing was prepared using the paste for foods obtained in Example 3 (Test No. T3-2). More specifically, 45 parts of salad oil, 20 parts of vinegar, 10 parts of the paste, 10 parts of grated onion, 1.5 part of common salt, 1 part of sodium glutamate, 1.5 part of mustard, 0.5 part of pepper and 10.5 parts of water were stirred for 5 minutes in a homogenizer to give an onion dressing. The dressing had smooth taste and texture and good flavour. The dressing can maintain the oil components in the well-dispersed condition over several minutes when mixing the dressing with shaking due to the effect of the paste.

Example 11: Ice Cream Comprising the Paste of the Invention

To a mixture of 75 parts of raw milk and 407.4 parts of water, there were added a carrageenan product (GENUGEL SWG-J available from Copenhagen Pectin Company; $x$-carrageenan content: 100% by weight; potassium ion content: 5% by weight; calcium ion content: 1.8% by weight) and 1.6 part of common salt, followed by mixing and heating up to 80 °C to completely dissolve the carrageenan. After maintaining the mixture at this temperature for 30 minutes to sterilize the same, it was pasted using "Stephan Cutter".

Completely smooth paste was obtained under conditions of a cutter rotational speed of 2000 rpm, a cooling speed of 5 °C/min and a removal temperature of 32 °C. The resulting paste clearly had a viscosity higher than that of currently used aqueous paste free of milk and having the same carrageenan concentration and had a milk white color, but had completely smooth taste and texture and flavour of milk. The viscosity thereof was found to be 9,300 cps at 25 °C.

An ice cream mix was prepared using 12.7% by weight of the paste. The composition of the ice cream mix is shown in the following Table 12.

Table 12

| Ingredient | Amount (part by weight) |
|---|---|
| Paste | 300 |
| Raw Milk | 700 |
| Butter | 94 |
| Sugar | 200 |
| Powdered Milk (free of heat treatment) | 86 |
| Extracted Soybean Protein | 40 |
| Monoglyceride | 4 |
| Locust Bean Gum/CMC Stabilizer | 6 |
| Vanilla Essence | 6 |
| Water | 930 |
| Total | 2366 |
| Milk Fat: 4.3%; Protein: 7.5%; Sugar: 8.5%; Paste: 12.7% | |

The ingredients except for the paste were treated at ordinary temperature for 30 minutes in a homogenizer, then the temperature of the mixture was raised to 80 °C and further the mixture was homogenized for additional 2 minutes to completely emulsify it. After cooling to ordinary temperature, the emulsion was homogenized for 5 minutes together with the paste and then ripened overnight in a refrigerator maintained at 5 °C.

The resulting ice cream mix was pre-frozen till the overrun reached 100% in a horizontal type ice cream-freezer to give soft-cream. The milk fat content of the soft-cream was about a half of the usual content, i.e., 4.3% and had good flavour and smooth taste and texture.

Moreover, an ice cream cup was filled with the soft-cream and then completely frozen in a freezer maintained at -40 °C to give ice cream. The ice cream was evaluated while adjusting the temperature thereof to -20 °C.

Thus, there was obtained ice cream having smooth taste and texture and satisfactory milk flavour. In addition, the ice cream had refreshing palatability as an effect of the addition of the paste of the present invention.

Example 12

The paste containing milk and prepared in Example 11 was incorporated into whipped raw cream. Commercially available raw cream (100 parts by weight) was sufficiently whipped with a beater, followed by addition of 100 parts by weight of the milk-containing paste cooled to 5 °C and sufficient mixing.

The resulting whipped raw cream compound had most satisfactory flavour, taste and texture and appearance and also had excellent shape retention.

Effects of the Invention

The present invention permits reduction of the fat and oil content in emulsion foods without impairing the flavour and taste and texture of the foods and hence reduction of the calorific value thereof. In particular, if a low calorific mayonnaise product is prepared while incorporating the paste for foods of the present invention into the product, the resulting mayonnnaise product has excellent flavour and taste and texture, as well as excellent physical properties such as viscosity characteristics, storability and miscibility with vegetables. Moreover, the paste permits the production of a mayonnaise product having a low fat and oil content which can not be achieved by other substitutes for fats and oils.

## Claims

1. Paste for foods having smooth taste and texture comprising 1.5 to 10% by weight of carrageenan mainly comprising $x$-carrageenan and 2 to 30% by weight of potassium ions based on the amount of the carrageenan, wherein it has a viscosity as determined at 25°C ranging from 300 to 25000 cps and wherein a diluent obtained by diluting the paste with water such that the concentration of the carrageenan is equal to 1% by weight can substantially completely pass through a sieve having a JIS mesh of 20 $\mu$m.

2. The paste for foods of claim 1 wherein it comprises 0.5 to 120% by weight of sodium ions based on the weight of the carrageenan.

3. The paste for foods of claim 1 or 2 wherein the carrageenan is a carrageenan product extracted from a seaweed, Eucheuma Cottonii or Chondrus Crispus, or a mixture thereof.

4. A method for preparing paste for foods comprising the steps of heating an aqueous composition which comprises 1.5 to 10% by weight of carrageenan mainly comprising $x$-carrageenan and 2 to 30% by weight of potassium ions based on the amount of the carrageenan to a temperature higher than the fusion temperature of carrageenan gel to dissolve the carrageenan; and then cooling the composition to a temperature lower than the gelling temperature of the composition while applying a shearing force thereto.

5. The method for preparing paste for foods of claim 4 wherein the aqueous composition comprises 0.5 to 120% by weight of sodium ions based on the weight of the carrageenan.

6. The method for preparing paste for foods of claim 4 or 5 wherein a cooling type colloid-mill comprising an inner cone and an outer cone which are coaxially positioned and at least one of which can rotate is used and the aqueous composition is passed through a clearance between the outer surface of the inner cone and the inner surface of the outer cone to simultaneously apply the shearing force to the aqueous composition and cool the composition.

7. The method for preparing paste for foods of claim 6 wherein the cooling type colloid-mill whose inner cone rotates is used under conditions of a rotational peripheral speed of not less than 5 m/sec, a clearance between the inner and outer cones ranging from 0.1 to 5 mm and a ratio: peripheral speed (m/sec)/clearance (mm) of not less than 5.

8. The method for preparing paste for foods of claim 6 or 7 wherein the cooling type colloid-mill used is provided with grooves or projections formed on at least one of the outer surface of the inner cone and the inner surface of the outer cone and parallel to the direction along which the aqueous composition proceeds.

9. The method for preparing paste for foods of claim 8 wherein the grooves or projections formed extend from an inlet for introducing the aqueous composition into the colloid-mill to the position immediately before an outlet.

10. The method for preparing paste for foods of claim 4 or 5 wherein a jacket type cutter mixer provided with rotary blades for scraping is used.

11. A food comprising the paste for foods as claimed in any one of claims 1, 2 and 3.

12. The food of claim 11 wherein it is a salad dressing, mayonnaise, a mayonnaise-like food or a mayonnaise-added food.

13. The food of claim 11 wherein it is ice cream or whipped cream.

| A. | CLASSIFICATION OF SUBJECT MATTER |
|---|---|

Int. Cl$^6$    A23L1/307

According to International Patent Classification (IPC) or to both national classification and IPC

| B. | FIELDS SEARCHED |
|---|---|

Minimum documentation searched (classification system followed by classification symbols)·

Int. Cl$^5$    A23L1/307

Documentation searched other than minimum documentation to the extent that such documents are included in the fields searched

B02C17/10, B02C17/16

Electronic data base consulted during the international search (name of data base and, where practicable, search terms used)

JICST

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | JP, A, 5-3767 (Hercules Inc.), January 14, 1993 (14. 01. 93) & EP, A, 501758 & AU, A, 9211232 & NO, A, 9200729 & CA, A, 2061498 & FI, A, 9200721 & BR, A, 9200626 & US, A, 5324531 | 1, 2, 11-13 |
| A | JP, A, 3-58770 (Ajinomoto Co., Inc.), March 13, 1991 (13. 03. 91), (Family: none) | 1, 11-13 |
| A | JP, A, 1-98460 (Fushimi Seisakusho), April 17, 1989 (17. 04. 89), (Family: none) | 1, 11-13 |
| A | JP, A, 5-111366 (Ina Shokuhin Kogyo K.K., Kissei Pharmaceutical Co., Ltd.), May 7, 1993 (07. 05. 93), (Family: none) | 1, 11-13 |
| A | JP, U, 63-066146 (Kawasaki Heavy Industries, Ltd.), May 2, 1988 (02. 05. 88), (Family: none) | 6-8 |

| X | Further documents are listed in the continuation of Box C. | | See patent family annex. |
|---|---|---|---|

* Special categories of cited documents:

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
|---|---|
| October 21, 1994 (21. 10. 94) | November 15, 1994 (15. 11. 94) |

| Name and mailing address of the ISA/ | Authorized officer |
|---|---|
| Japanese Patent Office | |
| Facsimile No. | Telephone No. |

Form PCT/ISA/210 (second sheet) (July 1992)

International application No.

PCT/JP94/01288

C (Continuation). DOCUMENTS CONSIDERED TO BE RELEVANT

| Category* | Citation of document, with indication, where appropriate, of the relevant passages | Relevant to claim No. |
|---|---|---|
| A | JP, A, 6-198207 (Bewlar AG.), July 19, 1994 (19. 07. 94) | 6-8 |
| A | JP, A, 59-113870 (Knorr Foods Co., Ltd.), June 30, 1984 (30. 06. 84), (Family: none) | 1, 11-13 |
| A | JP, A, 4-211342 (Rhone-Poulenc Inc.), August 3, 1992 (03. 08. 92) & EP, A, 449594 & AU, A, 917382 & CA, A, 2018723 | 1, 11-13 |